# EUROPEAN PATENT APPLICATION

(11) **EP 4 518 290 A1**
(43) Date of publication of application: **05.03.2025**
(21) Application number: 23829495.3
(22) Date of filing: 14.03.2023
(51) Int. Cl.: H04L 67/104, G06F 16/27, G06F 16/182

(54) **DATA PROCESSING METHOD AND RELATED DEVICE**

(30) Priority: 30.06.2022 CN 202210770817; 16.08.2022 CN 202210983123
(71) Applicant: Huawei Cloud Computing Technologies Co., Ltd., Guiyang, Guizhou 550025 (CN)
(72) Inventor: ZHANG, Ziyi, Guiyang, Guizhou 550025 (CN); QU, Qiang, Guiyang, Guizhou 550025 (CN); YANG, Ruijie, Guiyang, Guizhou 550025 (CN); DU, Mingxiao, Guiyang, Guizhou 550025 (CN)
(74) Representative: Grünecker Patent- und Rechtsanwälte PartG mbB
(86) International application number: PCT/CN2023/081418
(87) International publication number: WO 2024/001304

(57) **Abstract**

This application provides a data processing method, applied to a distributed data management system. The system includes a plurality of data management apparatuses. A first data management apparatus in the plurality of data management apparatuses corresponds to a first blockchain node in a blockchain network, and a second data management apparatus corresponds to a second blockchain node in the blockchain network. A storage mounted to the first data management apparatus and a storage mounted to the second data management apparatus are configured to form a storage resource pool of the blockchain network. The method includes: A target data management apparatus in the plurality of data management apparatuses receives a data operation request; and the target data management apparatus obtains a storage address of a plurality of data shards of target data from the blockchain network based on the data operation request, and performs I/O on the target data in the storage resource pool based on the storage address of the plurality of data shards. Interaction with the storage resource pool needs to be processed by a data management apparatus, thereby ensuring data consistency and improving data security, availability, and accessibility.

## Description

This application claims priorities to Chinese Patent Application No. 202210770817.1, filed with the China National Intellectual Property Administration on June 30, 2022 and entitled "RICH MEDIA STORAGE METHOD, APPARATUS, SERVER, AND STORAGE MEDIUM", and to Chinese Patent Application No. 202210983123.6, filed with the China National Intellectual Property Administration on August 16, 2022 and entitled "DATA PROCESSING METHOD AND RELATED DEVICE", both of which are incorporated herein by reference in their entireties.

### TECHNICAL FIELD

This application relates to the field of blockchain technologies, and in particular, to a data processing method, a system, an apparatus, a computing device cluster, a computer-readable storage medium, and a computer program product.

### BACKGROUND

A blockchain (blockchain) technology is a decentralized architecture and computing paradigm that uses a blockchain data structure to verify and store data, uses a distributed node consensus algorithm to generate and update data, uses cryptography to ensure data transmission and access security, and uses a smart contract formed by automation script code for programming and data operation.

A network constructed based on the blockchain technology is referred to as a blockchain network. Nodes in the blockchain network jointly maintain a distributed ledger. The distributed ledger is used as a storage carrier, and generally stores a series of simple data structures such as a key value or relationship data. As a blockchain is widely used in industries such as finance, energy, government affairs, aviation, agriculture, people's livelihood, and logistics, industry-related data, like rich media data such as a video, audio, and an image or big data such as a modeling file, has a growing demand for highly reliable on-chain storage.

If the rich media data or the big data is directly stored on-chain, a large quantity of on-chain resources are occupied. Based on this, a storage manner in which on-chain storage and off-chain storage are combined is proposed in the industry. Specifically, the rich media data or the big data is stored in an off-chain storage system, and a hash value of the data is stored on-chain. In this way, a user may obtain the on-chain hash value, obtain the data from the off-chain storage system to calculate a hash value of the data, and compare the on-chain hash value with the off-chain hash value obtained through calculation, to ensure data consistency.

However, a client, a transmission network, a storage network, and the like may have stability and security risks. Consequently, a problem such as data inconsistency and data tampering may be caused, and it is difficult to meet a service requirement.

### SUMMARY

This application provides a data processing method. In the method, a distributed data management system is introduced to manage data uploading, downloading, and the like. Specifically, data management apparatuses in the distributed data management system interact with a storage resource pool of a blockchain network formed by a storage mounted to the data management apparatuses, to implement input and output operations such as data uploading and downloading, and record related information such as a storage address of a data shard in the blockchain network. Even if data inconsistency occurs due to a stability or security issue of a client, a transmission network, or a storage network, data can be restored based on a storage address of a data copy stored on-chain. This ensures data consistency and improves data security, availability, and accessibility. This application further provides the distributed data management system, the data management apparatuses, a computing device cluster, a computer-readable storage medium, and a computer program product corresponding to the method.

According to a first aspect, this application provides a data processing method. The method is applied to a distributed data management system, and the distributed data management system includes a plurality of data management apparatuses. A first data management apparatus in the plurality of data management apparatuses corresponds to a first blockchain node in a blockchain network, and a second data management apparatus in the plurality of data management apparatuses corresponds to a second blockchain node in the blockchain network. A storage mounted to the first data management apparatus and a storage mounted to the second data management apparatus are configured to form a storage resource pool of the blockchain network.

A target data management apparatus in the plurality of data management apparatuses may receive a data operation request, where the data operation request is used to perform an input/output I/O operation on target data, and then the target data management apparatus obtains a storage address of a plurality of data shards of the target data from the blockchain network based on the data operation request, and performs I/O on the target data in the storage resource pool based on the storage address of the plurality of data shards.

In the method, the storage resource pool is managed by the distributed data management system. All interactions with the storage resource pool (for example, the I/O operation performed on the target data) need to be processed by the data management apparatus in the distributed data management system, and the data management apparatus also stores a storage address of the target data of the I/O operation on a chain. Even if data inconsistency occurs due to a stability or security issue of a client, a transmission network, or a storage network, data can be restored based on a storage address of a data copy stored on-chain. This ensures data consistency and improves data security, availability, and accessibility. In addition, in this method, related information of the I/O operation is stored on-chain, so that the operation can also be traced.

In some possible implementations, the data operation request is a write request, and the write request is used to write the target data, that is, upload the target data. Correspondingly, the target data management apparatus may obtain an allocation policy based on the data operation request and a smart contract of the blockchain network, and then the target data management apparatus allocates a storage resource to the plurality of data shards of the target data from the storage resource pool according to the allocation policy, to obtain the storage address of the plurality of data shards. The target data management apparatus may write the plurality of data shards into the storage resource pool based on a storage address of at least one data shard, and store the storage address of the plurality of data shards in a distributed ledger of the blockchain network.

According to the method, the distributed data management system is provided for the blockchain network. The data management apparatus in the distributed data management system determines the allocation policy, and stores the plurality of data shards of the target data in a distributed manner according to the allocation policy, to meet a distributed management requirement, avoid a risk that a manager does evil in centralized management, and construct a trusted system.

In some possible implementations, the target data management apparatus may determine weights of different storage resources according to the allocation policy with reference to at least one of a capacity, bandwidth, and a historical fault record of each storage, and allocate storage resources to the data shards based on the weights, to obtain the storage address of the data shards. The data shards of the target data are stored at the storage address determined according to the method, so that data storage and reading time can be reduced, and a waste of storage space can be reduced.

In some possible implementations, in a data uploading process of the distributed data management system, the target data management apparatus may further obtain a sharding policy based on the data operation request and the smart contract of the blockchain network. Then, the target data management apparatus may obtain a sharding algorithm, a quantity of shards, and a quantity of copies of each data shard according to the sharding policy. Correspondingly, when performing I/O, the target data management apparatus may perform sharding on the target data based on the sharding algorithm and the quantity of shards, to obtain the plurality of data shards of the target data, then writes copies of each data shard into the storage resource pool based on a storage address of the copies of each of the plurality of data shards, and stores the storage address of the copies of each data shard in the distributed ledger of the blockchain network.

According to the method, sharding is performed on the target data according to the sharding policy obtained from the blockchain network, to obtain the plurality of data shards, and then the plurality of data shards are stored in the storage resource pool in the distributed manner. In this way, storage (uploading) or reading (downloading) efficiency of the target data can be improved.

In some possible implementations, each data shard includes a plurality of copies. Even if several copies of the data shard are lost, deleted, or tampered with, data can still be restored based on another copy. When writing the copies of the data shard into the storage resource pool, the target data management apparatus may write the plurality of copies of each data shard into different types of storage media in the storage resource pool. In this way, even if one or more types of storage media are faulty, data can be restored by using a copy stored in another type of storage medium, thereby improving storage reliability and ensuring data security.

In some possible implementations, a quantity of copies of the data shard is equal to a quantity of blockchain nodes. To be specific, for each data shard of the target data, the target data management apparatus may store one copy in a storage mounted to a data management apparatus corresponding to each blockchain node in the blockchain network, to achieve an effect similar to storing the data shard in the blockchain network. In addition, there is no need to occupy a large quantity of on-chain storage resources of the blockchain network, and storage reliability is ensured by using low storage costs.

In some possible implementations, the target data management apparatus may further determine at least one of a hash value of the target data, a hash value of each of the plurality of data shards, or a data attribute of the target data. The data attribute may include one or more of a creator, creation time, and a topic. Then, the target data management apparatus may store at least one of the hash value of the target data, the hash value of each of the plurality of data shards, or the data attribute of the target data in the distributed ledger of the blockchain network.

In this way, data query may be performed based on the hash value of the target data, the hash value of the data shard, and the data attribute of the target data. This can improve query efficiency and ensure query accuracy.

In some possible implementations, the data operation request may be a read request, and the read request is used to read the target data, that is, download the target data. Specifically, the target data management apparatus may obtain the storage address of the plurality of data shards of the target data from a distributed ledger of the blockchain network based on the read request, obtains the plurality of data shards from the storage resource pool based on the storage address of the plurality of data shards, and then aggregates the plurality of data shards, to obtain the target data.

In the method, the target data management apparatus concurrently reads the plurality of data shards from the storage resource pool by using the blockchain network, and obtains the target data based on the plurality of data shards, thereby improving data reading (downloading) efficiency. In addition, according to the method, consistency of read data is ensured by using the blockchain network.

In some possible implementations, the storage resource pool may store a plurality of copies of the data shard. Correspondingly, when reading the data shards from the storage resource pool, the target data management apparatus may obtain an allocation policy from the blockchain network based on a smart contract, determines weights of different storage resources according to the allocation policy with reference to at least one of a capacity, bandwidth, and a historical fault record of each storage, and determines a target path from a plurality of paths based on the weights. The target path may be a path with lowest costs or a lowest latency in the plurality of paths for accessing the data shards. The target data management apparatus may access the target path, to obtain the data shards. In this way, a latency of reading the target data can be further shortened, and costs of reading the target data can be reduced.

In some possible implementations, the target data management apparatus may obtain an aggregation policy based on the data operation request and the smart contract of the blockchain network. Correspondingly, the target data management apparatus may aggregate the plurality of data shards according to the aggregation policy, to obtain the target data.

In this method, the data shards are aggregated by using the aggregation policy stored on-chain, to obtain the target data. If some data shards in the storage resource pool are tampered with, deleted, or lost, copies of the data shards can be obtained in a timely manner and aggregated to ensure data consistency.

In some possible implementations, the target data management apparatus may obtain local hash values and on-chain hash values of the plurality of data shards. The local hash values may be obtained by using a hash algorithm. For example, the local hash values are calculated by the data management apparatus by using the hash algorithm based on content of locally stored data shards. The on-chain hash values are hash values stored in the blockchain network. The target data management apparatus may first perform verification based on the local hash values or the on-chain hash values, to detect a tampered, deleted, or lost data shard in advance.

When determining that the local hash values match the on-chain hash values, the target data management apparatus starts the aggregation of the plurality of data shards, to obtain aggregated data. Then, the target data management apparatus may determine a hash value of the aggregated data, and obtain a hash value of the target data from the blockchain network. The target data management apparatus may perform verification based on the hash value of the aggregate data or the hash value of the target data. When the hash value of the aggregated data matches the hash value of the target data, the aggregated data is determined as the target data.

In this way, accuracy of the read target data may be ensured through hash value verification.

In some possible implementations, the target data management apparatus may obtain, from a blockchain node corresponding to the target data management apparatus, first meta information of a data shard in a storage mounted to the target data management apparatus, and obtain second meta information of the data shard from a storage mounted to the target data management apparatus. When the first information does not match the second meta information, the target data management apparatus determines that a fault occurs, and stores fault information in the distributed ledger of the blockchain network.

The target data management apparatus may periodically scan the blockchain node and the local storage mounted to the apparatus, and verify the meta information of the data shard stored on the blockchain node and the meta information of the locally stored data shard, to accelerate fault check, improve check efficiency, and further provide help for fault rectification.

In some possible implementations, the target data management apparatus may read fault information from the blockchain network. When the fault information represents that a data shard in a storage mounted to the target data management apparatus is tampered with, deleted, or lost, the target data management apparatus may obtain the data shard from a storage mounted to another data management apparatus, and locally stores the data shard, and then the target data management apparatus stores an updated storage address in the distributed ledger of the blockchain network.

The target data management apparatus reads the fault information stored on-chain, and performs fault rectification based on fault information related to the current apparatus, thereby ensuring data consistency.

According to a second aspect, this application provides a distributed data management system. The distributed data management system includes a plurality of data management apparatuses, a first data management apparatus in the plurality of data management apparatuses corresponds to a first blockchain node in a blockchain network, a second data management apparatus in the plurality of data management apparatuses corresponds to a second blockchain node in the blockchain network, and a storage mounted to the first data management apparatus and a storage mounted to the second data management apparatus are configured to form a storage resource pool of the blockchain network.

A target data management apparatus in the plurality of data management apparatuses is configured to receive a data operation request, where the data operation request is used to perform an input/output I/O operation on target data.

The target data management apparatus is further configured to: obtain a storage address of a plurality of data shards of the target data from the blockchain network based on the data operation request, and perform I/O on the target data in the storage resource pool based on the storage address of the plurality of data shards.

In some possible implementations, the data operation request is a write request, and the target data management apparatus is specifically configured to:
obtain an allocation policy based on the data operation request and a smart contract of the blockchain network;
allocate a storage resource to the plurality of data shards of the target data from the storage resource pool according to the allocation policy, to obtain the storage address of the plurality of data shards; and
write the plurality of data shards into the storage resource pool based on a storage address of at least one data shard, and store the storage address of the plurality of data shards in a distributed ledger of the blockchain network.

In some possible implementations, the target data management apparatus is further configured to:
obtain a sharding policy based on the data operation request and the smart contract of the blockchain network; and
obtain a sharding algorithm, a quantity of shards, and a quantity of copies of each data shard according to the sharding policy.

The target data management apparatus is specifically configured to:
perform sharding on the target data based on the sharding algorithm and the quantity of shards, to obtain the plurality of data shards of the target data; and
write copies of each data shard into the storage resource pool based on a storage address of the copies of each of the plurality of data shards, and store the storage address of the copies of each data shard in the distributed ledger of the blockchain network.

In some possible implementations, each data shard includes a plurality of copies.

The target data management apparatus is specifically configured to:
write the plurality of copies of each data shard into different types of storage media in the storage resource pool.

In some possible implementations, the target data management apparatus is further configured to:
determine at least one of a hash value of the target data, a hash value of each of the plurality of data shards, or a data attribute of the target data; and
store at least one of the hash value of the target data, the hash value of each of the plurality of data shards, or the data attribute of the target data in the distributed ledger of the blockchain network.

In some possible implementations, the data operation request is a read request, and the target data management apparatus is specifically configured to:
obtain the storage address of the plurality of data shards of the target data from a distributed ledger of the blockchain network based on the read request.

The target data management apparatus is specifically configured to:
obtain the plurality of data shards from the storage resource pool based on the storage address of the plurality of data shards; and
aggregate the plurality of data shards, to obtain the target data.

In some possible implementations, the target data management apparatus is further configured to:
obtain an aggregation policy based on the data operation request and a smart contract of the blockchain network.

The target data management apparatus is specifically configured to:
aggregate the plurality of data shards according to the aggregation policy, to obtain the target data.

In some possible implementations, the target data management apparatus is specifically configured to:
obtain local hash values and on-chain hash values of the plurality of data shards, where the local hash values are obtained by using a hash algorithm, and the on-chain hash values are hash values stored in the blockchain network;
when determining that the local hash values match the on-chain hash values, start the aggregation of the plurality of data shards, to obtain aggregated data; and
determine a hash value of the aggregated data, obtain a hash value of the target data from the blockchain network, and determine the aggregated data as the target data when the hash value of the aggregated data matches the hash value of the target data.

In some possible implementations, the target data management apparatus is further configured to:
obtain, from a blockchain node corresponding to the target data management apparatus, first meta information of a data shard in a storage mounted to the target data management apparatus, and obtain second meta information of the data shard from a storage mounted to the target data management apparatus; and
when the first information does not match the second meta information, determine that a fault occurs, and store fault information in the distributed ledger of the blockchain network.

In some possible implementations, the target data management apparatus is further configured to:
read fault information from the blockchain network;
when the fault information represents that a data shard in a storage mounted to the target data management apparatus is tampered with, deleted, or lost, obtain the data shard from a storage mounted to another data management apparatus, and locally store the data shard; and
store an updated storage address in the distributed ledger of the blockchain network.

According to a third aspect, this application provides a data management apparatus. The data management apparatus corresponds to a blockchain node in a blockchain network, a storage mounted to the data management apparatus and a storage mounted to another data management apparatus in a distributed data management system are configured to form a storage resource pool of the blockchain network, and the data management apparatus includes:
a communication module, configured to receive a data operation request, where the data operation request is used to perform an input/output I/O operation on target data; and
a management module, further configured to: obtain a storage address of a plurality of data shards of the target data from the blockchain network based on the data operation request, and perform I/O on the target data in the storage resource pool based on the storage address of the plurality of data shards.

In some possible implementations, the data operation request is a write request, and the management module is specifically configured to:
obtain an allocation policy based on the data operation request and a smart contract of the blockchain network;
allocate a storage resource to the plurality of data shards of the target data from the storage resource pool according to the allocation policy, to obtain the storage address of the plurality of data shards; and
write the plurality of data shards into the storage resource pool based on a storage address of at least one data shard, and store the storage address of the plurality of data shards in a distributed ledger of the blockchain network.

In some possible implementations, the management module is further configured to:
obtain a sharding policy based on the data operation request and the smart contract of the blockchain network; and
obtain a sharding algorithm, a quantity of shards, and a quantity of copies of each data shard according to the sharding policy.

The management module is specifically configured to:
perform sharding on the target data based on the sharding algorithm and the quantity of shards, to obtain the plurality of data shards of the target data; and
write copies of each data shard into the storage resource pool based on a storage address of the copies of each of the plurality of data shards, and store the storage address of the copies of each data shard in the distributed ledger of the blockchain network.

In some possible implementations, each data shard includes a plurality of copies.

The management module is specifically configured to:
write the plurality of copies of each data shard into different types of storage media in the storage resource pool.

In some possible implementations, the management module is further configured to:
determine at least one of a hash value of the target data, a hash value of each of the plurality of data shards, or a data attribute of the target data; and
store at least one of the hash value of the target data, the hash value of each of the plurality of data shards, or the data attribute of the target data in the distributed ledger of the blockchain network.

In some possible implementations, the data operation request is a read request, and the management module is specifically configured to:
obtain the storage address of the plurality of data shards of the target data from a distributed ledger of the blockchain network based on the read request;
obtain the plurality of data shards from the storage resource pool based on the storage address of the plurality of data shards; and
aggregate the plurality of data shards, to obtain the target data.

In some possible implementations, the management module is further configured to:
obtain an aggregation policy based on the data operation request and a smart contract of the blockchain network.

The management module is specifically configured to:
aggregate the plurality of data shards according to the aggregation policy, to obtain the target data.

In some possible implementations, the management module is specifically configured to:
obtain local hash values and on-chain hash values of the plurality of data shards, where the local hash values are obtained by using a hash algorithm, and the on-chain hash values are hash values stored in the blockchain network;
when determining that the local hash values match the on-chain hash values, start the aggregation of the plurality of data shards, to obtain aggregated data; and
determine a hash value of the aggregated data, obtain a hash value of the target data from the blockchain network, and determine the aggregated data as the target data when the hash value of the aggregated data matches the hash value of the target data.

In some possible implementations, the data management apparatus further includes:
a fault check module, configured to: obtain, from a blockchain node corresponding to the target data management apparatus, first meta information of a data shard in a storage mounted to the target data management apparatus, and obtain second meta information of the data shard from a storage mounted to the target data management apparatus; and when the first information does not match the second meta information, determine that a fault occurs, and store fault information in the distributed ledger of the blockchain network.

In some possible implementations, the data management apparatus further includes:
a fault rectification module, configured to: read fault information from the blockchain network; when the fault information represents that a data shard in a storage mounted to the target data management apparatus is tampered with, deleted, or lost, obtain the data shard from a storage mounted to another data management apparatus, and locally store the data shard; and store an updated storage address in the distributed ledger of the blockchain network.

According to a fourth aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the data processing method according to any one of the first aspect and the implementations of the first aspect.

According to a fifth aspect, this application provides a computer-readable storage medium. The computer-readable storage medium stores instructions, and the instructions instruct a computing device or a computing device cluster to perform the data processing method according to any one of the first aspect or the implementations of the first aspect.

According to a sixth aspect, this application provides a computer program product including instructions. When the computer program product runs on a computing device or a computing device cluster, the computing device or the computing device cluster is enabled to perform the data processing method according to any one of the first aspect or the implementations of the first aspect.

In this application, based on the implementations provided in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of a distributed data management system according to an embodiment of this application;
FIG. 2 is a diagram of an architecture of a distributed data management system according to an embodiment of this application;
FIG. 3 is a diagram of an architecture of a distributed data management system in a multi-scenario alliance according to an embodiment of this application;
FIG. 4 is a flowchart of a data processing method according to an embodiment of this application;
FIG. 5 is a schematic flowchart of data uploading according to an embodiment of this application;
FIG. 6 is a schematic flowchart of data downloading according to an embodiment of this application;
FIG. 7 is a schematic flowchart of fault check according to an embodiment of this application;
FIG. 8 is a schematic flowchart of fault rectification according to an embodiment of this application;
FIG. 9 is a diagram of a structure of a distributed data management system according to an embodiment of this application;
FIG. 10 is a diagram of a structure of a computing device according to an embodiment of this application;
FIG. 11 is a diagram of a structure of a computing device cluster according to an embodiment of this application;
FIG. 12 is a diagram of a structure of a computing device cluster according to an embodiment of this application; and
FIG. 13 is a diagram of a structure of a computing device cluster according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

A blockchain network, which may also be referred to as a blockchain for short, is a peer-to-peer (peer-to-peer, P2P) network constructed based on a blockchain technology. The blockchain network includes a plurality of blockchain nodes, and each blockchain node is a peer node. In the blockchain network, the plurality of blockchain nodes jointly maintain a chained list ledger that continuously grows and that is constructed by ordered data blocks. Each blockchain node stores copies of the chained list ledger, and maintains consistency between the copies. Therefore, the chained list ledger is also referred to as a distributed ledger of the blockchain network.

Blockchain networks can be classified into a public blockchain (public blockchain), a private blockchain (private blockchain), and a consortium blockchain (consortium blockchain) based on the openness of read and write permissions. The public blockchain is a public blockchain network, and the read and write permissions are open to all nodes. The private blockchain is a private blockchain network, and the read and write permissions are open to a node. The consortium blockchain is a consortium blockchain, and the read and write permissions are open to nodes that join a consortium (members in the consortium).

The distributed ledger of the blockchain network is usually used to store a simple data structure such as key-value data and relationship data. As the blockchain technology is widely used in industries such as finance, energy, government affairs, aviation, agriculture, people's livelihood, and logistics, industry-related data, like rich media data such as a video, audio, and an image or big data such as a modeling file, has a growing demand for highly reliable on-chain storage.

Considering that on-chain storage needs to occupy a large quantity of resources, large-scale data such as rich media data (such as a video, audio, and an image) or big data (such as a modeling file) may be stored in an off-chain storage system, and a hash value of the data is stored on-chain. In this way, a user may compare the on-chain hash value with a hash value obtained by calculating the data stored off-chain, to ensure data consistency. However, a client, a transmission network, a storage network, and the like may have stability and security risks. Consequently, a problem such as data inconsistency and data tampering may be caused, and it is difficult to meet a service requirement.

In view of this, embodiments of this application provide a data processing method. The method may be applied to a distributed data management system. The management system includes a plurality of data management apparatuses. Each data management apparatus is a part of the distributed data management system. The distributed data management system is essentially a distributed storage engine, and is mainly configured to manage storage of rich media data. Therefore, the distributed data management system may also be referred to as a distributed rich media engine, and the data management apparatus in the distributed data management system is a part of the distributed rich media engine. A first data management apparatus in the plurality of data management apparatuses corresponds to a first blockchain node in a blockchain network, and a second data management apparatus in the plurality of data management apparatuses corresponds to a second blockchain node in the blockchain network. A storage mounted to the first data management apparatus and a storage mounted to the second data management apparatus are configured to form a storage resource pool of the blockchain network.

Specifically, target data management in the plurality of data management apparatuses may receive a data operation request, where the data operation request is used to perform an input/output (input/output, I/O) operation on target data, and then the target data management apparatus may obtain a storage address of a plurality of data shards (which may also be referred to as shards for short in some cases) of the target data from the blockchain network based on the data operation request, and perform I/O on the target data in the storage resource pool based on the storage address of the plurality of data shards.

In the method, the storage resource pool is managed by the distributed data management system. All interactions with the storage resource pool (for example, the I/O operation performed on the target data) need to be processed by the data management apparatus in the distributed data management system, and the data management apparatus also stores, on a chain, a storage address of the target data on which the I/O operation is performed. Even if data inconsistency occurs due to a stability or security issue of a client, a transmission network, or a storage network, data can be restored based on a storage address of a data copy stored on-chain. This ensures data consistency and improves data security, availability, and accessibility. In addition, in this method, related information of the I/O operation is stored on-chain, so that the operation can also be traced.

To make the technical solutions in this application clearer and easier to understand, the following describes a system architecture in embodiments of this application with reference to the accompanying drawings.

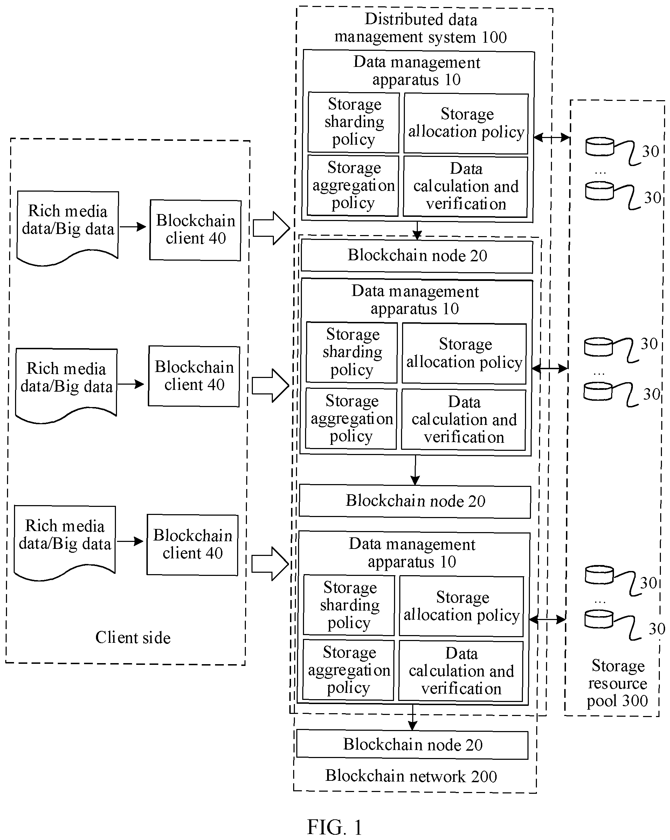

Refer to a diagram of an architecture of a distributed data management system shown in FIG. 1. The distributed data management system 100 includes a plurality of data management apparatuses 10, each of the plurality of data management apparatuses 10 corresponds to one blockchain node 20 in a blockchain network 200, and a storage 30 is mounted to each data management apparatus 10. It should be noted that the data management apparatus 10 in this embodiment of this application supports takeover and adaptation of different storage media. For example, the data management apparatus 10 may mount different storage media, including but not limited to a hard disk drive (hard disk drive, HDD) or a solid-state drive (solid-state drive, SDD). Storages 30 mounted to the plurality of data management apparatuses 10 may be configured to form a storage resource pool 300 of the blockchain network.

In an example in FIG. 1, the data management apparatus 10 may further be connected to a blockchain client 40. A participant of a blockchain, for example, a tenant on a cloud, may write large-scale data such as rich media data or big data into the storage resource pool by using the blockchain client 40, or read large-scale data such as rich media data or big data from the storage resource pool 300 by using the blockchain client 40.

Specifically, the data management apparatus 10 is configured to receive a data operation request, for example, a data operation request sent by the tenant by using the blockchain client 40. The data operation request is used to perform an input/output I/O operation on target data. The data management apparatus 10 obtains a storage address of a plurality of data shards of the target data from the blockchain network based on the data operation request, and performs I/O on the target data based on the storage address of the plurality of data shards. For example, when the data operation request is a write request, the data management apparatus 10 may perform sharding on the target data, then determine a storage address of data shards, and store the data shards based on the storage address. In addition to storing a hash value of the target data and hash values of the data shards on the chain, the data management apparatus 10 also stores the storage address of the data shards on the chain. For another example, when the data operation request is a read request, the data management apparatus 10 may obtain a storage address of data shards from the blockchain network, obtain the data shards based on the storage address, and then aggregate the data shards to obtain the target data. It should be noted that the data management apparatus 10 may separately verify the hash values of the data shards before aggregation. Specifically, the hash values are calculated based on the data shards, and the hash values are compared with on-chain hash values, to implement the verification. Similarly, the data management apparatus 10 may alternatively verify a hash value of aggregated data after aggregation, to determine whether the aggregated data is the target data.

For problems such as easy data loss and tampering caused by distributed storage resources and separate management, the data management apparatus 10 in this embodiment of this application further proposes a corresponding customized contract providing an interface, for example, an application programming interface (application programming interface, API), for a storage sharding policy, a storage allocation policy (which may also be referred to as storage sharding routing), or a storage aggregation policy (where the aggregation policy refers to a policy for aggregating the data shards), for each distributed storage engine to use. The data management apparatus 10 in the distributed data management system 100 may reach a consensus on the storage sharding policy, the storage allocation policy, and the storage aggregation policy by using a smart contract of the blockchain network. In this way, when performing data I/O, the data management apparatus may calculate a shard storage location (a storage location identified by a storage address) according to the allocation policy with reference to a remaining storage capacity of storage, a shard type, a quantity of shards, bandwidth, a quantity of historical faults, and the like, to reduce data I/O time (storage or reading time) and reduce a waste of storage space.

In addition, the data management apparatus 10 traces the I/O operation by using the smart contract, and hands over the storage allocation policy, the storage allocation policy, the storage aggregation policy, and execution logic thereof to contract consensus for processing. A current storage writing or reading action is recognized by a multi-party endorsement result, thereby ensuring data security and avoiding storage inconsistency or a fault caused by data tampering. Further, the data management apparatus 10 defines different data sharding algorithms by using the smart contract, and divides data into unreadable data shards. No data can be obtained from the storage medium either. The data management apparatus 10 reads shards in different storage media, aggregates the shards, and returns the aggregated shards to the blockchain client. On one hand, a sharding manner may be extended, and data shards are automatically aggregated, thereby simplifying a user operation. On the other hand, the data is divided into the unreadable data shards and stored in storage media managed by different data management apparatuses 10, and any data management apparatus 10 cannot independently obtain data, so that data privacy security is ensured.

The data management apparatus 10 shown in FIG. 1 may be a software apparatus, and the software apparatus may be deployed on another computing device independent of the blockchain node. Alternatively, the data management apparatus shown in FIG. 1 may be a hardware apparatus. For example, the hardware apparatus may be a computing device that is independent of the blockchain node and that has a function of managing large-scale data, such as rich media data.

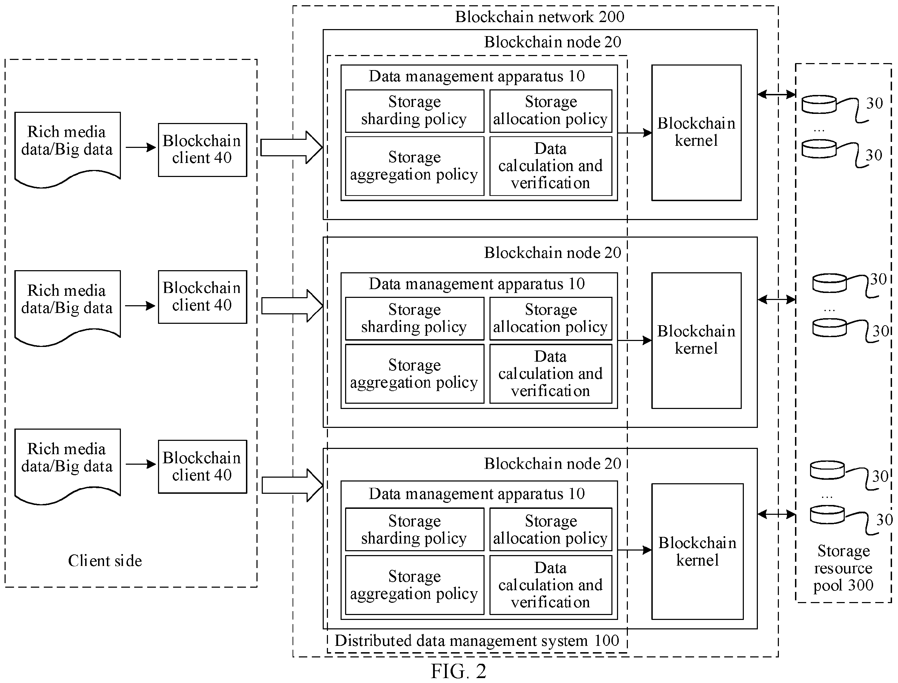

In some possible implementations, refer to a diagram of an architecture of a distributed data management system 100 shown in FIG. 2. Each data management apparatus 10 of the distributed data management system 100 may alternatively be deployed on a blockchain node 20, that is, the blockchain node 20 includes a blockchain kernel and the data management apparatus 10. The data management apparatus 10 may be middleware or a component, and the middleware or the component may be integrated into the blockchain node 20.

The distributed data management system 100 in embodiments of this application may be applied to industries such as finance, energy, government affairs, aviation, agriculture, people's livelihood, and logistics. For example, the distributed data management system 100 may be applied to scenarios such as rich media data storage, file storage, digital asset storage, and non-fungible token (non-fungible token, NFT) transaction. In addition, the distributed data management system 100 may be used as a distributed storage bottom layer, and supports metaverse or Web 3.0.

When being applied to the scenarios, the distributed data management system 100 supports being deployed in a private cloud, a public cloud, a hybrid cloud, or an edge node. In the public cloud, a cloud service provider provides a cloud service for a user through a public Internet (Internet), and the user may access the cloud and enjoy various services, including but not limited to computing, storage, a network, and the like, through the Internet. The private cloud is a cloud computing usage mode built by an enterprise to provide a service for the enterprise. The private cloud is built for use by an enterprise alone and may be deployed in a data center of the enterprise or in an equipment room of the cloud service provider. The hybrid cloud is a cloud computing usage mode that combines the private cloud and the public cloud. The edge node is relative to a cloud computing data center, and refers to a network node that has few middle links with a final access user. The edge node may be an equipment room or a physical device. Compared with accessing an origin server directly, accessing the edge node by the user has a better response capability and better connection speed.

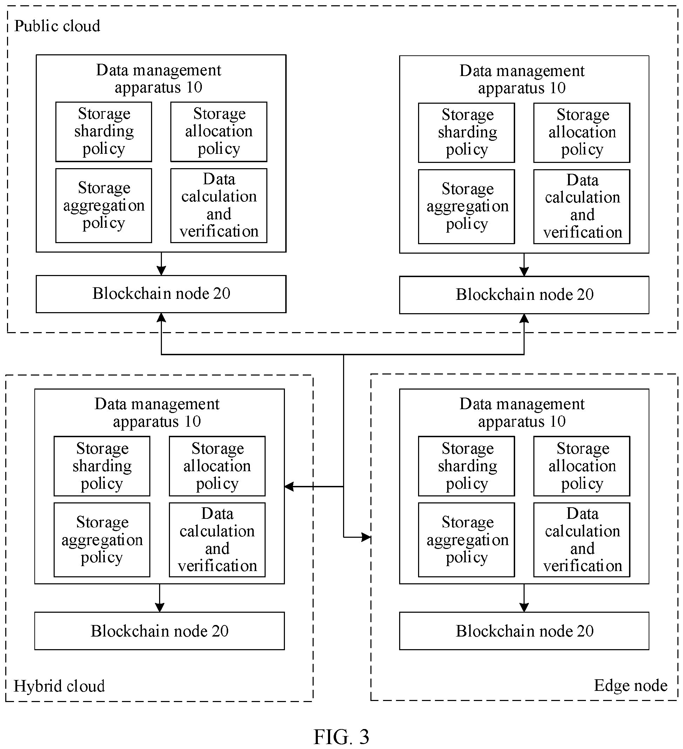

In some possible implementations, the distributed data management system 100 may alternatively be deployed in different environments in a distributed manner. Refer to a diagram of an architecture of the distributed data management system 100 shown in FIG. 3. A plurality of data management apparatuses 10 of the distributed data management system 100 may be separately deployed in the public cloud, the hybrid cloud, and the edge node, to provide a data management service for a multi-scenario alliance.

Based on the distributed data management system 100 provided in embodiments of this application, embodiments of this application further provides a corresponding data processing method.

To make technical solutions in this application clearer and easier to understand, the following describes the data processing method in embodiments of this application with reference to the accompanying drawings.

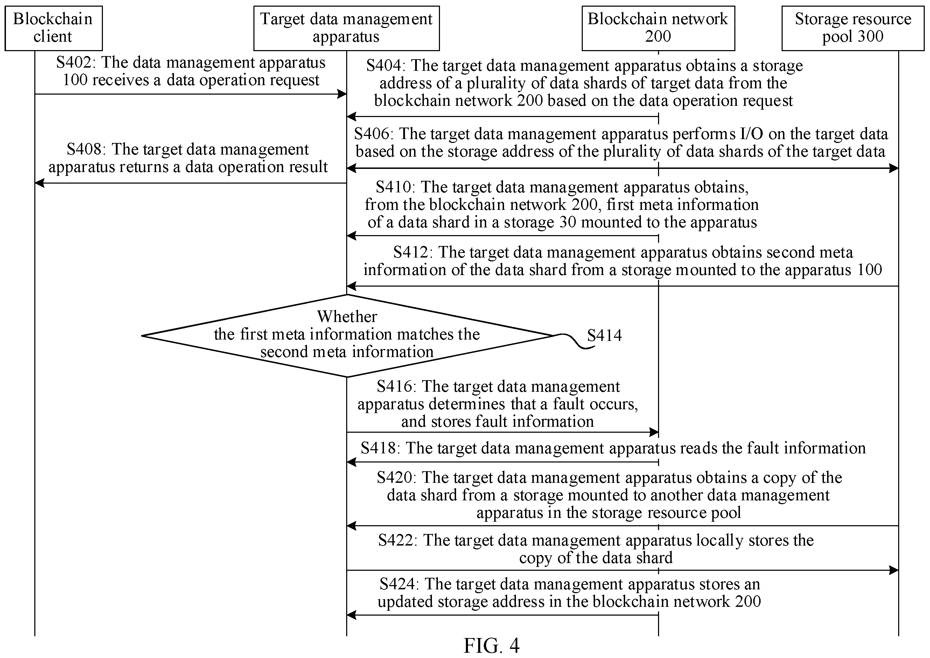

Refer to a flowchart of a data processing method shown in FIG. 4. The method includes the following steps.

S402: A target data management apparatus receives a data operation request sent by a blockchain client.

The target data management apparatus may be any data management apparatus 10 in the distributed data management system 100, for example, may be the first data management apparatus or the second data management apparatus.

The data operation request is used to perform an input/output I/O operation on target data. The data operation request may be a write request, and the write request is used to write (store) the target data. The data operation request may alternatively be a read request, and the read request is used to read the target data. Based on this, the data operation request may include an operation type, for example, read or write, indicating to write or read the target data. The data operation request further includes meta information of the target data, and the meta information may be, for example, a name of the target data. An example in which the target data is a rich media file is used for description. The data operation request includes an operation type and a file name of the rich media file.

S404: The target data management apparatus obtains a storage address of data shards of the target data from a blockchain network 200 based on the data operation request.

In this embodiment, the target data is dispersedly stored in a form of data shards, and is specifically stored in a storage resource pool in a distributed storage manner. Based on this, the target data management apparatus may first obtain the storage address of the data shards of the target data from the blockchain network 200 based on the data operation request and a smart contract of the blockchain network 200. The following separately describes cases of writing the target data and reading the target data by using examples.

When the data operation request is a write request, the target data management apparatus may obtain an allocation policy based on the data operation request and the smart contract of the blockchain network, and then the target data management apparatus allocates a storage resource to the plurality of data shards of the target data from the storage resource pool 300 according to the allocation policy, to obtain the storage address of the plurality of data shards.

The allocation policy may be a weight-based allocation policy. The weight-based allocation policy may be specifically used to determine a weight of each storage 30 based on a remaining storage capacity, a shard type, a quantity of shards, bandwidth, and a quantity of historical faults of each storage 30, and determine a shard storage location based on the weight of each storage 30. A sharding policy can ensure that each data shard exists on two or three storage media, thereby avoiding data loss caused by a fault of a specific storage medium and ensuring data security. The storage address of the data shards may be used to generate an index table and recorded in a blockchain ledger.

When the data operation request is a read request, because the storage address of the plurality of data shards of the target data that is to be read based on the read request are also stored in the blockchain network (stored on-chain) in a write process, the target data management apparatus may obtain the storage address of the plurality of data shards of the target data from a distributed ledger of the blockchain network 200 based on the read request.

S406: The target data management apparatus performs I/O on the target data based on the storage address of the plurality of data shards of the target data.

When the data operation request is a write request, the target data management apparatus may write the plurality of data shards into the storage resource pool 300 based on a storage address of at least one data shard, and store the storage address of the plurality of data shards in the distributed ledger of the blockchain network 200.

Further, before obtaining the allocation policy based on the smart contract of the blockchain network 200, the target data management apparatus may further obtain the sharding policy based on the data operation request and the smart contract of the blockchain network 200. Correspondingly, the target data management apparatus may obtain a sharding algorithm, a quantity of shards, and a quantity of copies of each data shard according to the sharding policy. The sharding algorithm varies according to a data type. For example, when the data type is a video file, the sharding algorithm may include one or more of free sharding, average sharding, sharding by duration, and sharding by file size. The quantity of shards may be determined based on a size of the target data and a quantity of storage nodes in the storage resource pool 300. The quantity of copies of each data shard may be determined based on a reliability requirement of the target data. For example, when the reliability requirement of the target data is high, each data shard may be stored in three copies, that is, the quantity of copies of each data shard may be 3.

Correspondingly, the target data management apparatus may write copies of each data shard into the storage resource pool 300 based on a storage address of the copies of each of the plurality of data shards. To facilitate subsequent reading, the target data management apparatus may further store the storage address of the copies of each data shard in the blockchain network 200. The target data management apparatus may record the storage address of the copies of each data shard in the distributed ledger of the blockchain network 200 based on the smart contract.

Further, for the plurality of copies of the data shard, the target data management apparatus may write the plurality of copies of each data shard into different types of storage media in the storage resource pool 300. In this way, even if a type of storage medium is faulty, fault rectification may be performed based on a copy in another storage medium.

In this embodiment, to facilitate data verification in a subsequent data reading or data query process, the target data management apparatus may further determine at least one of a hash value of the target data, a hash value of each of the plurality of data shards, or a data attribute of the target data, where the data attribute of the target data may include one or more of a creator, creation time, or a topic of the target data. The target data management apparatus may store at least one of the hash value of the target data, the hash value of each of the plurality of data shards, or the data attribute of the target data in the blockchain network. Similar to the storage address for storing the data shard, the target data management apparatus may record at least one of the hash value of the target data, the hash value of the data shard, or the data attribute of the target data in the distributed ledger based on the smart contract.

When the data operation request is a read request, the target data management apparatus may obtain the storage address of the plurality of data shards of the target data from the blockchain network 200 (for example, the distributed ledger of the blockchain network 200) based on the read request, obtain the plurality of data shards from the storage resource pool 300 based on the storage address of the plurality of data shards, and then aggregate the plurality of data shards, to obtain the target data.

The target data management apparatus may further obtain an aggregation policy based on the data operation request and the smart contract of the blockchain network 200, and then aggregate the plurality of data shards according to the aggregation policy, to obtain the target data. The aggregation policy corresponds to the sharding policy. An example in which the target data is a video is used for description. When the sharding policy is a policy of sharding by duration, the aggregation policy may be a policy of aggregation by duration. The target data management apparatus may sort the data shards in sequence based on start time or end time of the data shards, and concatenate the sorted data shards, to implement aggregation of the data shards.

It should be noted that, when each of the plurality of data shards of the target data has a plurality of copies, the target data management apparatus may determine a target path from a plurality of paths used to access the plurality of copies, where the target path may be a path with a minimum latency or lowest costs, and pull the data shards based on the target path, to aggregate the data shards. When determining the target path, the target data management apparatus may calculate weights of the paths based on at least one of a remaining storage capacity, a shard type, a quantity of shards, bandwidth, or a quantity of historical faults of the storage 30 mounted to the data management apparatuses, and determine the target path from the plurality of paths based on the weights.

In some possible implementations, the target data management apparatus may further obtain local hash values and on-chain hash values of the plurality of data shards. The local hash values are obtained by using a hash algorithm. Specifically, after obtaining the data shards, the target data management apparatus may perform a hash operation on content of the data shards by using the hash algorithm, to obtain the local hash values. The on-chain hash values are hash values stored in the blockchain network 200. Specifically, the target data management apparatus triggers a read operation on the blockchain network 200, to read the hash values of the plurality of data shards of the target data stored in the blockchain network 200. Then, the target data management apparatus may compare the local hash values with the on-chain hash values. When determining that the local hash values match the on-chain hash values, for example, the local hash values are consistent with the on-chain hash values, the target data management apparatus starts the aggregation of the plurality of data shards, to obtain the aggregated data.

Further, the target data management apparatus may further determine a hash value of the aggregated data, and obtain a hash value of the target data from the blockchain network 200. Similarly, the target data management apparatus may compare the hash value of the aggregated data with the hash value of the target data stored on-chain. When the hash value of the aggregated data matches the hash value of the target data, the target data management apparatus determines the aggregated data as the target data.

S408: The target data management apparatus returns a data operation result.

When the data operation request is a write request, the data operation result may be a write success or a write failure. If the data operation result is the write success, the target data management apparatus may execute another data operation request. If the data operation result is the write failure, the blockchain client may be indicated to resend the write request, to rewrite the target data.

When the data operation request is a read request, the data operation result may be a read success or a read failure. When the data operation result is the read success, the data operation result may further include the target data read by the target data management apparatus. When the data operation result is the read failure, the target data management apparatus may indicate the blockchain client to resend the read request, to re-read the target data.

It should be noted that S408 is an optional step in this embodiment of this application. For example, when the data operation request is a write request, the target data management apparatus may not return a data operation result.

S410: The target data management apparatus obtains, from the blockchain network 200, first meta information of a data shard in a storage 30 mounted to the target data management apparatus.

Specifically, the target data management apparatus may periodically scan the blockchain network 200. To be specific, the target data management apparatus periodically scans a blockchain node 20 corresponding to the target data management apparatus, to obtain the first meta information of the data shard in the storage 30 mounted to the target data management apparatus. The first meta information is meta information stored on-chain, and the first meta information may include one or more of a name, a size, or a hash value of the data shard stored on-chain.

A periodicity of scanning the blockchain network 200 by the target data management apparatus may be set based on an empirical value. For example, the periodicity may be set to 5 minutes (minutes, mins).

S412: The target data management apparatus obtains second meta information of the data shard from a storage 30 mounted to the target data management apparatus.

The target data management apparatus may periodically scan the storage 30 (which may also be referred to as a local storage) mounted to the target data management apparatus, to obtain the second meta information of the data shard in the storage 30 mounted to the target data management apparatus. The second meta information is meta information stored off-chain, and the second meta information may include one or more of a name, a size, or a hash value of the data shard stored off-chain.

S414: The target data management apparatus determines whether the first meta information matches the second meta information. If the first meta information does not match the second meta information, perform S416.

Specifically, the target data management apparatus may compare the first meta information with the second meta information, to determine whether the first meta information matches the second meta information. When the first meta information does not match the second meta information, it indicates that a fault occurs, for example, a storage medium in a local storage is lost or a data shard is deleted or tampered with, and the target data management apparatus may perform S416.

S416: The target data management apparatus determines that the fault occurs, and stores fault information in the blockchain network.

The fault information may include a node identifier of a faulty node or a shard identifier of a faulty data shard. The node identifier may be one or more of a node name or an IP address of a node, and the shard identifier of the data shard may be a shard name. When the data shard is deleted or tampered with, the fault information may further include meta information of data to which the data shard belongs.

The target data management apparatus may record the fault information in the distributed ledger of the blockchain network 200 based on the smart contract of the blockchain network 200. This may lay a foundation for subsequent fault rectification and implement data operation tracing.

S418: The target data management apparatus reads the fault information.

The target data management apparatus may periodically read the fault information. The target data management apparatus may access the blockchain node 20, to periodically read the fault information.

It should be noted that a periodicity in which the target data management apparatus scans the blockchain network 200 or the local storage for fault check may be consistent with or different from a periodicity in which the target data management apparatus reads the fault information for fault rectification. For example, the periodicity in which the target data management apparatus reads the fault information for fault rectification may be greater than the fault check periodicity.

In some examples, the periodicity in which the target data management apparatus scans the blockchain network 200 or the local storage for fault check may be 5 mins, and the periodicity in which the data management apparatus reads the fault information for fault rectification may be 5 mins or 10 mins.

S420: The target data management apparatus obtains, based on the fault information, a copy of a data shard from a storage mounted to another data management apparatus in the storage resource pool 300.

When the fault information represents that a storage medium in the storage 30 mounted to the target data management apparatus is lost, the target data management apparatus may obtain, from a storage mounted to another data management apparatus in the storage resource pool 300, copies of all data shards stored in the lost storage medium.

When the fault information represents that a data shard in the storage 30 mounted to the target data management apparatus is deleted or tampered with, the target data management apparatus may obtain a copy of the deleted or tampered data shard from a storage mounted to another data management apparatus in the storage resource pool 300.

S420: The target data management apparatus locally stores the copy of the data shard.

The data management apparatus writes the copy of the data shard into the storage mounted to the target data management apparatus, to implement local storage of a target data shard. It should be noted that, when the fault information represents that the storage medium in the storage 30 mounted to the target data management apparatus is lost, the target data management apparatus may first mount a new storage medium, and then write the copies of the data shards into the storage 30 mounted to the target data management apparatus.

S424: The target data management apparatus stores an updated storage address in the blockchain network.

In a fault rectification process, the storage address of the data shards is correspondingly updated. The target data management apparatus may store the updated storage address in the blockchain network 200, for example, store the updated storage address in the distributed ledger of the blockchain network 200 by using the smart contract of the blockchain network 200.

It should be noted that S410 to S416 are a specific implementation of fault check, and S418 to S424 are an implementation of fault rectification. Alternatively, S410 to S416 or S418 to S424 may not be performed when the data processing method in this embodiment of this application is performed.

Based on the foregoing content descriptions, an embodiment of this application provides a data processing method. In this method, the blockchain node 20 in the blockchain network 200 supports mounting of different types of external storage, to provide a storage capability of storing large-scale data such as rich media data and modeling data based on the blockchain network 200. The blockchain client provides a call interface, supporting users in uploading or downloading the large-scale data such as the rich media data through the call interface. In a data uploading or downloading process, the target data management apparatus in the distributed data management system 100 needs to participate, and stores and records related information in the uploading or downloading process on the chain. Even if data is tampered with or deleted, the data can be restored in a timely manner based on the related information stored on-chain, thereby improving data security, availability, and accessibility, and operation traceability. In addition, in the method, the storage 30 mounted to each blockchain node 20 may use distributed storage, to provide an adapted distributed storage resource pool for a decentralized system such as the blockchain network 200, to meet a decentralization requirement.

FIG. 4 describes the data processing method according to an embodiment of this application. The following describes in detail procedures of data uploading, data downloading, fault check, and fault rectification with reference to the accompanying drawings.

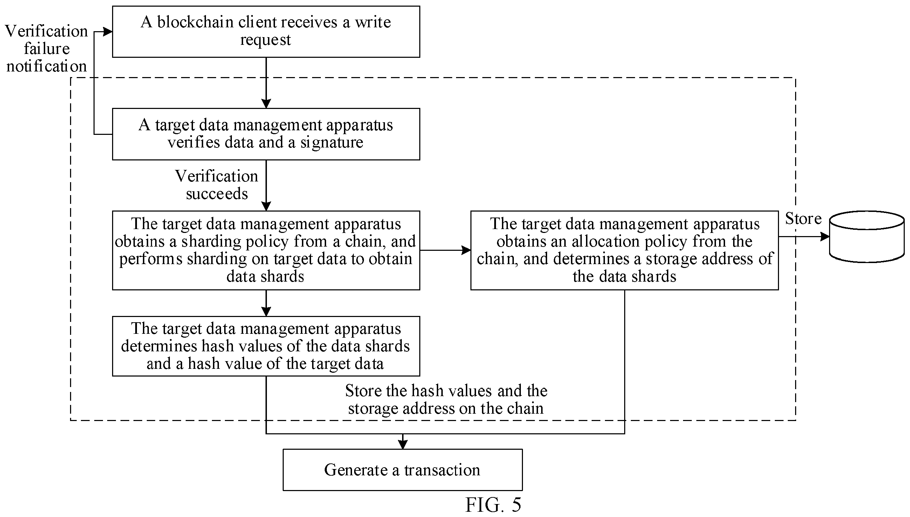

First, refer to a schematic flowchart of data uploading shown in FIG. 5. The following steps are specifically included.

Step 1: A blockchain client receives a write request, and sends the write request to a target data management apparatus.

The write request is used to write target data, and the target data may be large-scale data such as rich media data or big data. The write request is specifically used to write the target data into a storage resource pool formed by a storage mounted to each blockchain node in a blockchain network, that is, upload the target data to the storage resource pool of the blockchain network. Therefore, the write request is also referred to as a data upload request.

It should be noted that the write request may include the target data. For example, the target data may be encapsulated in payload of the write request, and transmitted to the target data management apparatus by using the write request, so that the target data management apparatus uploads the target data to the storage resource pool of the blockchain network.

Step 2: The target data management apparatus in a distributed data management system verifies the target data and a signature based on the write request. If the verification succeeds, perform step 3. If the verification fails, perform step 8.

Specifically, considering that the target data may be tampered with in a transmission process, the target data management apparatus may perform integrity check on the target data. For example, the write request may carry integrity check code. After receiving the write request, the target data management apparatus may calculate integrity check code based on the target data in the write request, and then compare the integrity check code carried in the write request with the locally calculated integrity check code. When the check code is consistent, it indicates that the integrity check succeeds. When the check code is inconsistent, it indicates that the integrity check fails and the target data may be tampered with.

In addition, in the transmission process of the target data, a man-in-the-middle attack (man-in-the-middle attack, MITM) may further exist. Based on this, the write request may further include a signature of a user. Correspondingly, the target data management apparatus may further verify the signature.

It should be noted that step 2 is an optional step in this embodiment of this application, and step 2 may not be performed when the method in this embodiment of this application is performed. For example, when the entire system is deployed in a trusted environment, step 2 may not be performed.

Step 3: The target data management apparatus obtains a sharding policy from the blockchain network, and performs sharding on the target data to obtain a plurality of data shards.

Step 4: The target data management apparatus obtains an allocation policy from the blockchain network, and determines a storage address of each of the plurality of data shards according to the allocation policy.

Step 5: The target data management apparatus writes the data shards into the storage resource pool based on a storage of each data shard.

Step 6: The target data management apparatus determines hash values of the data shards and a hash value of the target data.

For specific implementation of step 3 to step 6, refer to related content descriptions in the embodiment shown in FIG. 4. Details are not described herein again.

Step 7: The target data management apparatus generates a transaction based on the hash values of the data shards, the hash value of the target data, and a storage address of the data shards, and stores the transaction on a chain.

The target data management apparatus may generate a transaction block based on the hash values of the data shards, the hash value of the target data, and the storage address of the data shards. Blockchain nodes reach a consensus on the transaction block, and the transaction block may be added to a distributed ledger, to store the transaction on the chain. It should be noted that the target data management apparatus may further add a data attribute to the transaction block, to store the data attribute on the chain.

Step 8: The target data management apparatus returns a verification failure notification.

The verification failure notification indicates that the verification fails, and the blockchain client may resend the data upload request, to re-upload the target data.

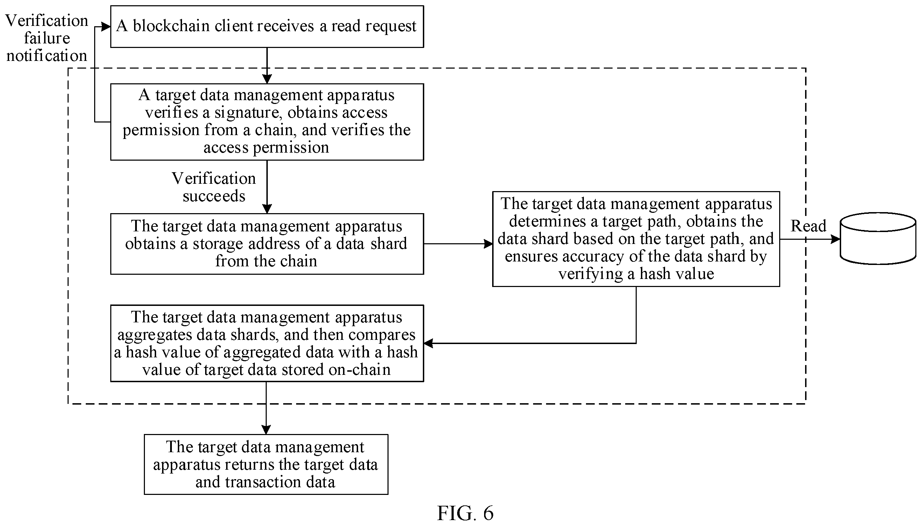

Then, refer to a schematic flowchart of data downloading shown in FIG. 6. The following steps are specifically included.

Step 1: A blockchain client receives a read request, and sends the read request to a target data management apparatus.

The read request is used to read target data, and the target data may be large-scale data such as rich media data or big data. The read request is specifically used to read the target data from a storage resource pool formed by a storage mounted to each blockchain node in a blockchain network, that is, download the target data from the storage resource pool in the blockchain network 200. Therefore, the read request is also referred to as a data download request.

Step 2: The target data management apparatus in a distributed data management system verifies a signature based on the read request, obtains access permission from the blockchain network, and verifies the access permission. If the verification succeeds, perform step 3. If the verification fails, perform step 7.

For specific implementation of performing signature verification by the target data management apparatus, refer to related content descriptions in the embodiment shown in FIG. 5. Details are not described herein again. A distributed ledger of the blockchain network may store access permission for different data. The target data management apparatus may obtain access permission for the target data read by using the read request, and determine whether a current user has the access permission. If the user has the access permission, the access permission verification succeeds. If the user does not have the access permission, the access permission verification fails.

When the signature verification succeeds and the access permission verification succeeds, step 3 may be performed. When the signature verification fails or the access permission verification fails, step 7 is performed.

Step 3: The target data management apparatus obtains a storage address of a data shard from the blockchain network.

Step 4: The target data management apparatus determines a target path from a storage address of copies of data shards, obtains the data shards from the storage resource pool based on the target path, then obtains on-chain hash values and local hash values of the data shards, and performs verification based on the on-chain hash values and the local hash values, to ensure accuracy of the data shards.

Step 5: The target data management apparatus aggregates the data shards, and then compares a hash value of the aggregated data with a hash value of the target data stored on-chain. When the hash value of the aggregated data is consistent with the hash value of the target data stored on-chain, perform step 6.

Step 6: The target data management apparatus returns the target data and corresponding transaction data.

Step 7: The target data management apparatus returns a verification failure notification.

The verification failure notification indicates that the verification fails, and the blockchain client may resend the data download request, to re-download the target data.

In this method, the blockchain client may use a data obtaining interface (also referred to as a data download interface) to query the transaction data by using a hash value and a data attribute. After data query is initiated, the target data management apparatus in the distributed data management system verifies the signature based on a blockchain system, obtains a shard address from the chain, pulls and aggregates the data shards, and compares the hash value of the aggregated data with the hash value of the target data stored on-chain for verification. If the verification succeeds, the target data is returned to the blockchain client. If the verification fails, other data shards are read for aggregation and the verification continues.

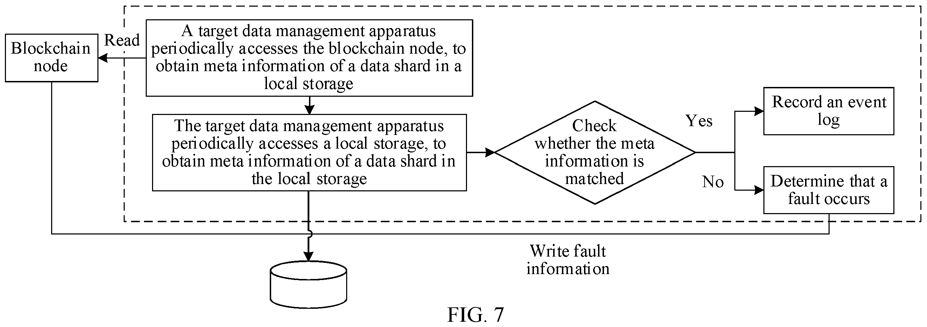

Then, refer to a schematic flowchart of fault check shown in FIG. 7. The following steps are specifically included.

Step 1: A target data management apparatus periodically accesses a blockchain node, to obtain meta information of a data shard in a local storage.

The meta information obtained by the target data management apparatus from the blockchain node is also referred to as first meta information. The first meta information includes one or more of a name, a size, or a hash value of the data shard.

Step 2: The target data management apparatus periodically accesses a local storage, to obtain meta information of a data shard in the local storage.

The meta information obtained by the target data management apparatus from the local storage is also referred to as second meta information. The second meta information includes one or more of a name, a size, or a hash value of the data shard.

Step 3: The target data management apparatus compares the meta information obtained from the blockchain node with the meta information obtained from the local storage. If the meta information is consistent, perform step 4. If the meta information is inconsistent, perform step 5.

Step 4: The target data management apparatus determines that storage is normal, and records an event log.

Step 5: The target data management apparatus determines a storage fault, and writes fault information into the blockchain node in a blockchain network.

The target data management apparatus in a distributed data management system may ensure storage reliability by periodically detecting a locally mounted storage medium. Specifically, the target data management apparatus may query a hash value or a data attribute of a locally stored data shard, and obtain a hash value and a data attribute of the data shard from a chain for comparison. If the local storage medium is lost or a stored data shard is deleted or tampered with, the target data management apparatus may determine a new storage address to store the data shard, store fault information and the new storage address on the chain, and notify another target data management apparatus of the fault information and the new storage address. If the hash values and the data attributes are respectively consistent, a local log event is recorded, and the data shard in the storage is to be checked at next polling time.

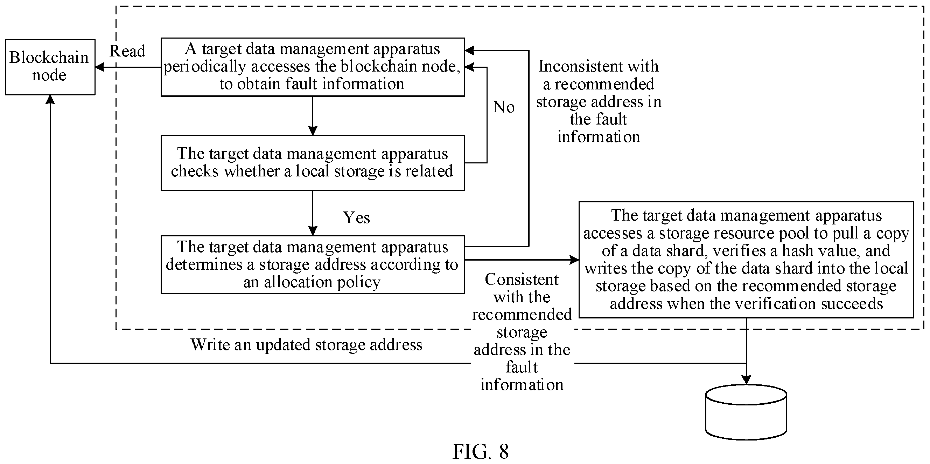

Then, refer to a schematic flowchart of fault rectification shown in FIG. 8. The following steps are specifically included.

Step 1: A target data management apparatus periodically accesses a blockchain node, to obtain fault information.

Step 2: The target data management apparatus determines, based on the fault information, whether a local storage of the target data management apparatus is related. If the local storage of the target data management apparatus is related, perform step 3. If the local storage of the target data management apparatus is not related, return to step 1 and wait for next polling.

The fault information includes a recommended storage address. If the storage address belongs to a storage (local storage) mounted to the target data management apparatus, it indicates that the fault information relates to the local storage of the target data management apparatus.

Step 3: The target data management apparatus determines a storage address according to an allocation policy. If the storage address is consistent with the recommended storage address in the fault information, perform step 4. If the storage address is inconsistent with the recommended storage address in the fault information, return to step 1 and wait for next polling.

Step 4: The target data management apparatus accesses a storage resource pool to pull a copy of a data shard, verifies a hash value, and writes the copy of the data shard into the local storage based on the recommended storage address when the verification succeeds.

Step 5: The target data management apparatus updates a storage location to the blockchain node.

In this method, a distributed data management system may transfer the fault information via a blockchain network, periodically recover the data shard by using a multi-backup mechanism to achieve a high-availability distributed storage capability, periodically poll on-chain fault information, and check whether the local storage is recommended. If the local storage is recommended, weights are calculated to verify the storage location. If storage addresses are the same, the data shard is pulled from a storage node with backup. After the hash value and a data attribute are verified, the data shard is stored in a local storage medium. Then, the fault information is eliminated and an updated storage address is stored on-chain.

Based on the data processing method provided in embodiments of this application, embodiments of this application further provide the foregoing distributed data management system 100. The following describes the distributed data management system 100 with reference to the accompanying drawings.

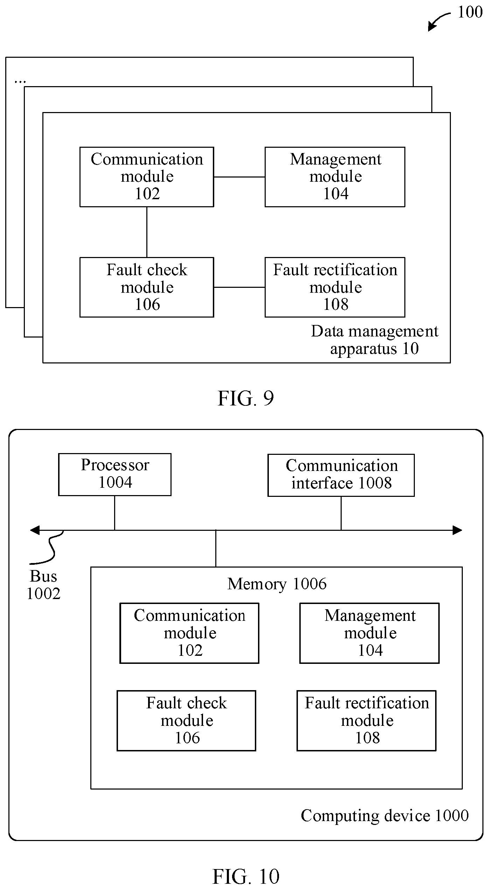

Refer to a diagram of a structure of the distributed data management system 100 shown in FIG. 9. The distributed data management system 100 includes a plurality of data management apparatuses 10. A first data management apparatus in the plurality of data management apparatuses 10 corresponds to a first blockchain node in a blockchain network, and a second data management apparatus in the plurality of data management apparatuses 10 corresponds to a second blockchain node in the blockchain network. A storage mounted to the first data management apparatus and a storage mounted to the second data management apparatus are configured to form a storage resource pool of the blockchain network.

A target data management apparatus in the plurality of data management apparatuses 10 is configured to receive a data operation request, where the data operation request is used to perform an input/output I/O operation on target data.

The target data management apparatus is further configured to: obtain a storage address of a plurality of data shards of the target data from the blockchain network based on the data operation request, and perform I/O on the target data in the storage resource pool based on the storage address of the plurality of data shards.

In some possible implementations, the data operation request is a write request, and the target data management apparatus is specifically configured to:
obtain an allocation policy based on the data operation request and a smart contract of the blockchain network;
allocate a storage resource to the plurality of data shards of the target data from the storage resource pool according to the allocation policy, to obtain the storage address of the plurality of data shards; and
write the plurality of data shards into the storage resource pool based on a storage address of at least one data shard, and store the storage address of the plurality of data shards in a distributed ledger of the blockchain network.

In some possible implementations, the target data management apparatus is further configured to:
obtain a sharding policy based on the data operation request and the smart contract of the blockchain network; and
obtain a sharding algorithm, a quantity of shards, and a quantity of copies of each data shard according to the sharding policy.

The target data management apparatus is specifically configured to:
perform sharding on the target data based on the sharding algorithm and the quantity of shards, to obtain the plurality of data shards of the target data; and
write copies of each data shard into the storage resource pool based on a storage address of the copies of each of the plurality of data shards, and store the storage address of the copies of each data shard in the distributed ledger of the blockchain network.

In some possible implementations, each data shard includes a plurality of copies.

The target data management apparatus is specifically configured to:
write the plurality of copies of each data shard into different types of storage media in the storage resource pool.

In some possible implementations, the target data management apparatus is further configured to:
determine at least one of a hash value of the target data, a hash value of each of the plurality of data shards, or a data attribute of the target data; and
store at least one of the hash value of the target data, the hash value of each of the plurality of data shards, or the data attribute of the target data in the distributed ledger of the blockchain network.

In some possible implementations, the data operation request is a read request, and the target data management apparatus is specifically configured to:
obtain the storage address of the plurality of data shards of the target data from a distributed ledger of the blockchain network based on the read request.

The target data management apparatus is specifically configured to:
obtain the plurality of data shards from the storage resource pool based on the storage address of the plurality of data shards; and
aggregate the plurality of data shards, to obtain the target data.

In some possible implementations, the target data management apparatus is further configured to:
obtain an aggregation policy based on the data operation request and a smart contract of the blockchain network.

The target data management apparatus is specifically configured to:
aggregate the plurality of data shards according to the aggregation policy, to obtain the target data.

In some possible implementations, the target data management apparatus is specifically configured to:
obtain local hash values and on-chain hash values of the plurality of data shards, where the local hash values are obtained by using a hash algorithm, and the on-chain hash values are hash values stored in the blockchain network;
when determining that the local hash values match the on-chain hash values, start the aggregation of the plurality of data shards, to obtain aggregated data; and
determine a hash value of the aggregated data, obtain a hash value of the target data from the blockchain network, and determine the aggregated data as the target data when the hash value of the aggregated data matches the hash value of the target data.

In some possible implementations, the target data management apparatus is further configured to:
obtain, from a blockchain node corresponding to the target data management apparatus, first meta information of a data shard in a storage mounted to the target data management apparatus, and obtain second meta information of the data shard from a storage mounted to the target data management apparatus; and
when the first information does not match the second meta information, determine that a fault occurs, and store fault information in the distributed ledger of the blockchain network.

In some possible implementations, the target data management apparatus is further configured to:
read fault information from the blockchain network;
when the fault information represents that a data shard in a storage mounted to the target data management apparatus is tampered with, deleted, or lost, obtain the data shard from a storage mounted to another data management apparatus, and locally store the data shard; and
store an updated storage address in the distributed ledger of the blockchain network.

The target data management apparatus may be any one of the plurality of data management apparatuses 10, for example, may be the first data management apparatus or the second data management apparatus. The following describes a structure of the data management apparatus. As shown in FIG. 9, the data management apparatus 10 includes:
a communication module 102, configured to receive a data operation request, where the data operation request is used to perform an input/output I/O operation on target data; and
a management module 104, further configured to: obtain a storage address of a plurality of data shards of the target data from the blockchain network based on the data operation request, and perform I/O on the target data in the storage resource pool based on the storage address of the plurality of data shards.

It should be noted that the management module 104 is configured to implement a function of the storage allocation policy shown in FIG. 1, FIG. 2, and FIG. 3. The storage address of the data shards may be determined according to the allocation policy, and I/O is performed on the target data in the storage resource pool based on the storage address.

The communication module 102 or the management module 104 may be implemented by using a hardware module or a software module.

When implemented by using software, the communication module 102 or the management module 104 may be an application program or an application program module that runs on a computing device or a computing device cluster.

When implemented by hardware, the communication module 102 may be implemented by using a transceiver module such as a network interface card or a transceiver. The management module 104 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

In some possible implementations, the data operation request is a write request, and the management module 104 is specifically configured to:
obtain an allocation policy based on the data operation request and a smart contract of the blockchain network;
allocate a storage resource to the plurality of data shards of the target data from the storage resource pool according to the allocation policy, to obtain the storage address of the plurality of data shards; and
write the plurality of data shards into the storage resource pool based on a storage address of at least one data shard, and store the storage address of the plurality of data shards in a distributed ledger of the blockchain network.

In some possible implementations, the management module 104 is further configured to:
obtain a sharding policy based on the data operation request and the smart contract of the blockchain network; and
obtain a sharding algorithm, a quantity of shards, and a quantity of copies of each data shard according to the sharding policy.

The management module is specifically configured to:
perform sharding on the target data based on the sharding algorithm and the quantity of shards, to obtain the plurality of data shards of the target data; and
write copies of each data shard into the storage resource pool based on a storage address of the copies of each of the plurality of data shards, and store the storage address of the copies of each data shard in the distributed ledger of the blockchain network.

In the method, the management module 104 is further configured to implement a function of the storage sharding policy shown in FIG. 1, FIG. 2, and FIG. 3. According to the sharding policy, sharding may be performed on the target data, and I/O is performed on the target data in the storage resource pool based on the storage address of the data shards of the target data.

In some possible implementations, each data shard includes a plurality of copies.

The management module 104 is specifically configured to:
write the plurality of copies of each data shard into different types of storage media in the storage resource pool.

In some possible implementations, the management module 104 is further configured to:
determine at least one of a hash value of the target data, a hash value of each of the plurality of data shards, or a data attribute of the target data; and
store at least one of the hash value of the target data, the hash value of each of the plurality of data shards, or the data attribute of the target data in the distributed ledger of the blockchain network.

In some possible implementations, the data operation request is a read request, and the management module 104 is specifically configured to:
obtain the storage address of the plurality of data shards of the target data from a distributed ledger of the blockchain network based on the read request;
obtain the plurality of data shards from the storage resource pool based on the storage address of the plurality of data shards; and
aggregate the plurality of data shards, to obtain the target data.

In some possible implementations, the management module 104 is further configured to:
obtain an aggregation policy based on the data operation request and a smart contract of the blockchain network.

The management module 104 is specifically configured to:
aggregate the plurality of data shards according to the aggregation policy, to obtain the target data.

In the method, the management module 104 is further configured to implement a function of the storage aggregation policy shown in FIG. 1, FIG. 2, and FIG. 3. According to the aggregation policy, the data shards of the target data may be aggregated to restore the target data, to perform I/O on the target data.

In some possible implementations, the management module 104 is specifically configured to:
obtain local hash values and on-chain hash values of the plurality of data shards, where the local hash values are obtained by using a hash algorithm, and the on-chain hash values are hash values stored in the blockchain network;
when determining that the local hash values match the on-chain hash values, start the aggregation of the plurality of data shards, to obtain aggregated data; and
determine a hash value of the aggregated data, obtain a hash value of the target data from the blockchain network, and determine the aggregated data as the target data when the hash value of the aggregated data matches the hash value of the target data.

In the method, the management module 104 is further configured to implement a function of data calculation and verification shown in FIG. 1, FIG. 2, or FIG. 3. Specifically, the management module 104 may calculate the local hash values, and then compare the local hash values with the on-chain hash values, to implement data calculation and verification, thereby ensuring accuracy of performing I/O on the target data.

In some possible implementations, the data management apparatus 10 further includes:
a fault check module 106, configured to: obtain, from a blockchain node corresponding to the target data management apparatus, first meta information of a data shard in a storage mounted to the target data management apparatus, and obtain second meta information of the data shard from a storage mounted to the target data management apparatus; and when the first information does not match the second meta information, determine that a fault occurs, and store fault information in the distributed ledger of the blockchain network.

The fault check module 106 may be implemented by using a hardware module or a software module.

When implemented by using software, the fault check module 106 may be an application program or an application program module that runs on the computing device or the computing device cluster.

When implemented by using hardware, the fault check module 106 may be a device implemented by using an application-specific integrated circuit ASIC, a programmable logic device PLD, or the like. The PLD may be implemented by a complex programmable logic device CPLD, a field programmable gate array FPGA, a general array logic GAL, or any combination thereof.

In some possible implementations, the data management apparatus 10 further includes:
a fault rectification module 108, configured to: read fault information from the blockchain network; when the fault information represents that a data shard in a storage mounted to the target data management apparatus is tampered with, deleted, or lost, obtain the data shard from a storage mounted to another data management apparatus, and locally store the data shard; and store an updated storage address in the distributed ledger of the blockchain network.

Similarly, the fault rectification module 108 may be implemented by using a hardware module or a software module.

When implemented by using software, the fault rectification module 108 may be an application program or an application program module that runs on the computing device or the computing device cluster.

When implemented by hardware, the fault rectification module 108 may be a device implemented by using an application-specific integrated circuit ASIC, a programmable logic device PLD, or the like. The PLD may be implemented by a complex programmable logic device CPLD, a field programmable gate array FPGA, a general array logic GAL, or any combination thereof.

This application further provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a computing device in a central cloud, for example, a central server, or a computing device in an edge cloud, for example, an edge server. Alternatively, the computing device 1000 may be a lightweight device, for example, a terminal device such as a smartphone or a smart wearable device. It should be understood that a quantity of processors and a quantity of memories in the computing device 1000 are not limited in this application.

The bus 1002 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of indication, the bus is indicated by using only one line in FIG. 10. However, it does not indicate that there is only one bus or only one type of bus. The bus 1002 may include a path for transmitting information between components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1006 stores executable program code, and the processor 1004 executes the executable program code to implement the data processing method. Specifically, the memory 1006 stores instructions used by the distributed data management system 100 or the data management apparatus 10 to perform the data processing method.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device 1000. The computing device 1000 may be a server, for example, a central server or an edge server. In some embodiments, the computing device 1000 may alternatively be a terminal device.

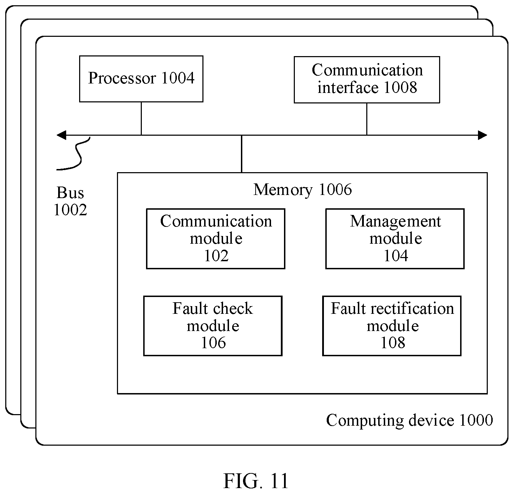

As shown in FIG. 11, the computing device cluster includes at least one computing device 1000. A memory 1006 in one or more computing devices 1000 in the computing device cluster may store same instructions used by the distributed data management system 100 to perform the data processing method.

In some possible implementations, the one or more computing devices 1000 in the computing device cluster may alternatively be configured to execute some instructions used by the distributed data management system 100 to perform the data processing method. In other words, a combination of the one or more computing devices 1000 may jointly execute the instructions used by the distributed data management system 100 to perform the data processing method.

It should be noted that memories 1006 in different computing devices 1000 in the computing device cluster may store different instructions, to perform some functions of the distributed data management system 100.

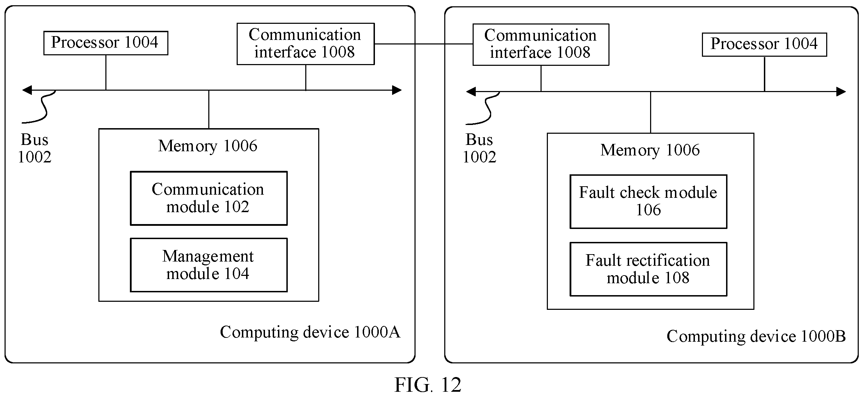

FIG. 12 shows a possible implementation. As shown in FIG. 12, two computing devices 1000A and 1000B are connected through a communication interface 1008. A memory in the computing device 1000A stores instructions used to perform functions of the communication module 102 and the management module 104. A memory in the computing device 1000B stores instructions for functions of the fault check module 106 and the fault rectification module 108. In other words, memories 1006 of the computing devices 1000A and 1000B jointly store instructions used by the distributed data management system 100 to perform the data processing method.

In a connection manner between computing device clusters shown in FIG. 12, it may be considered that in the data processing method provided in this application, a distributed ledger maintained by a blockchain node in a blockchain network needs to be scanned during fault check, and fault information stored in the blockchain node needs to be read during fault rectification. Therefore, it is considered that the functions implemented by the communication module 102 and the management module 104 are performed by the computing device 1000A, and the functions implemented by the fault check module 106 and the fault rectification module 108 are performed by the computing device 1000B.

It should be understood that functions of the computing device 1000A shown in FIG. 12 may alternatively be completed by a plurality of computing devices 1000. Similarly, functions of the computing device 1000B may alternatively be completed by a plurality of computing devices 1000.

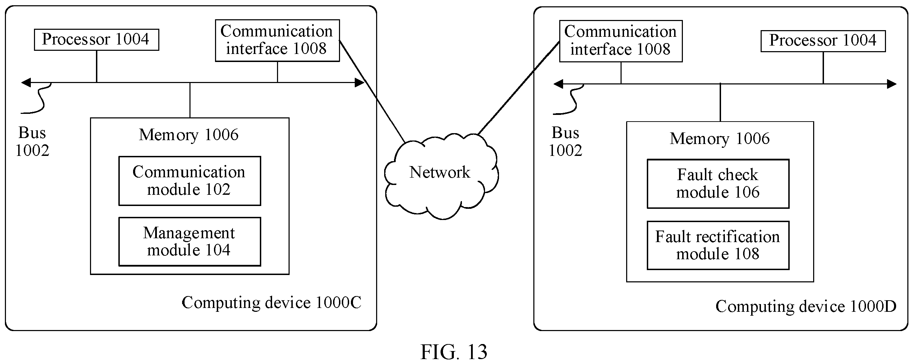

In some possible implementations, the one or more computing devices in the computing device cluster may be connected through a network. The network may be a wide area network, a local area network, or the like. FIG. 13 shows a possible implementation. As shown in FIG. 13, two computing devices 1000C and 1000D are connected through a network. Specifically, each computing device is connected to the network through a communication interface of the computing device. In this possible implementation, a memory 1006 in the computing device 1000C stores instructions for performing functions of the communication module 102 and the management module 104. In addition, a memory 1006 in the computing device 1000D stores instructions for performing functions of the fault check module 106 and the fault rectification module 108.

In a connection manner between computing device clusters shown in FIG. 13, it may be considered that in the data processing method provided in this application, a distributed ledger maintained by a blockchain node in a blockchain network needs to be scanned, or fault information stored in the blockchain node needs to be read. Therefore, it is considered that the functions implemented by the communication module 102 and the management module 104 are performed by the computing device 1000C, and the functions implemented by the fault check module 106 and the fault rectification module 108 are performed by the computing device 1000D. It should be understood that functions of the computing device 1000C shown in FIG. 13 may alternatively be completed by a plurality of computing devices 1000. Similarly, functions of the computing device 1000D may alternatively be completed by a plurality of computing devices 1000.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the data processing method applied to the distributed data management system 100.

An embodiment of this application further provides a computer program product including instructions. The computer program product may be a software or program product that includes instructions and that can run on a computing device or a computing device cluster or be stored in any usable medium. When the computer program product runs on at least one computing device (the computing device or the computing device cluster), the at least one computing device is enabled to perform the data processing method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions of embodiments of this application.

## Claims

1. A data processing method, applied to a distributed data management system, wherein the distributed data management system comprises a plurality of data management apparatuses, a first data management apparatus in the plurality of data management apparatuses corresponds to a first blockchain node in a blockchain network, a second data management apparatus in the plurality of data management apparatuses corresponds to a second blockchain node in the blockchain network, a storage mounted to the first data management apparatus and a storage mounted to the second data management apparatus are configured to form a storage resource pool of the blockchain network, and the method comprises:
receiving, by a target data management apparatus in the plurality of data management apparatuses, a data operation request, wherein the data operation request is used to perform an input/output I/O operation on target data; and
obtaining, by the target data management apparatus, a storage address of a plurality of data shards of the target data from the blockchain network based on the data operation request, and performing I/O on the target data in the storage resource pool based on the storage address of the plurality of data shards.

2. The method according to claim 1, wherein the data operation request is a write request, and the obtaining, by the target data management apparatus, a storage address of a plurality of data shards of the target data from the blockchain network based on the data operation request comprises:
obtaining, by the target data management apparatus, an allocation policy based on the data operation request and a smart contract of the blockchain network; and
allocating, by the target data management apparatus, a storage resource to the plurality of data shards of the target data from the storage resource pool according to the allocation policy, to obtain the storage address of the plurality of data shards; and
the performing, by the target data management apparatus, I/O on the target data in the storage resource pool based on the storage address of the plurality of data shards comprises:
writing, by the target data management apparatus, the plurality of data shards into the storage resource pool based on a storage address of at least one data shard, and storing the storage address of the plurality of data shards in a distributed ledger of the blockchain network.

3. The method according to claim 2, wherein the method further comprises:
obtaining, by the target data management apparatus, a sharding policy based on the data operation request and the smart contract of the blockchain network; and
obtaining, by the target data management apparatus, a sharding algorithm, a quantity of shards, and a quantity of copies of each data shard according to the sharding policy; and
the performing, by the target data management apparatus, I/O on the target data based on the storage address of the plurality of data shards comprises:
performing, by the target data management apparatus, sharding on the target data based on the sharding algorithm and the quantity of shards, to obtain the plurality of data shards of the target data; and
writing, by the target data management apparatus, copies of each data shard into the storage resource pool based on a storage address of the copies of each of the plurality of data shards, and storing the storage address of the copies of each data shard in the distributed ledger of the blockchain network.

4. The method according to claim 3, wherein each data shard comprises a plurality of copies; and
the writing, by the target data management apparatus, copies of each data shard into the storage resource pool comprises:
writing, by the target data management apparatus, the plurality of copies of each data shard into different types of storage media in the storage resource pool.

5. The method according to any one of claims 2 to 4, wherein the method further comprises:
determining, by the target data management apparatus, at least one of a hash value of the target data, a hash value of each of the plurality of data shards, or a data attribute of the target data; and
storing, by the target data management apparatus, at least one of the hash value of the target data, the hash value of each of the plurality of data shards, or the data attribute of the target data in the distributed ledger of the blockchain network.

6. The method according to claim 1, wherein the data operation request is a read request, and the obtaining, by the target data management apparatus, a storage address of a plurality of data shards of the target data from the blockchain network based on the data operation request comprises:
obtaining, by the target data management apparatus, the storage address of the plurality of data shards of the target data from a distributed ledger of the blockchain network based on the read request; and
the performing, by the target data management apparatus, I/O on the target data based on the storage address of the plurality of data shards comprises:
obtaining, by the target data management apparatus, the plurality of data shards from the storage resource pool based on the storage address of the plurality of data shards; and
aggregating, by the target data management apparatus, the plurality of data shards, to obtain the target data.

7. The method according to claim 6, wherein the method further comprises:
obtaining, by the target data management apparatus, an aggregation policy based on the data operation request and a smart contract of the blockchain network; and
the aggregating, by the target data management apparatus, the plurality of data shards, to obtain the target data comprises:
aggregating, by the target data management apparatus, the plurality of data shards according to the aggregation policy, to obtain the target data.

8. The method according to claim 6, wherein the aggregating, by the target data management apparatus, the plurality of data shards, to obtain the target data comprises:
obtaining, by the target data management apparatus, local hash values and on-chain hash values of the plurality of data shards, wherein the local hash values are obtained by using a hash algorithm, and the on-chain hash values are hash values stored in the blockchain network;
when determining that the local hash values match the on-chain hash values, starting, by the target data management apparatus, the aggregation of the plurality of data shards, to obtain aggregated data; and
determining, by the target data management apparatus, a hash value of the aggregated data, obtaining a hash value of the target data from the blockchain network, and determining the aggregated data as the target data when the hash value of the aggregated data matches the hash value of the target data.

9. The method according to any one of claims 1 to 8, wherein the method further comprises:
obtaining, by the target data management apparatus from a blockchain node corresponding to the target data management apparatus, first meta information of a data shard in a storage mounted to the target data management apparatus, and obtaining second meta information of the data shard from a storage mounted to the target data management apparatus; and
when the first information does not match the second meta information, determining, by the target data management apparatus, that a fault occurs, and storing fault information in the distributed ledger of the blockchain network.

10. The method according to any one of claims 1 to 8, wherein the method further comprises:
reading, by the target data management apparatus, fault information from the blockchain network;
when the fault information represents that a data shard in a storage mounted to the target data management apparatus is tampered with, deleted, or lost, obtaining, by the target data management apparatus, the data shard from a storage mounted to another data management apparatus, and locally storing the data shard; and
storing, by the target data management apparatus, an updated storage address in the distributed ledger of the blockchain network.

11. A distributed data management system, wherein the distributed data management system comprises a plurality of data management apparatuses, a first data management apparatus in the plurality of data management apparatuses corresponds to a first blockchain node in a blockchain network, a second data management apparatus in the plurality of data management apparatuses corresponds to a second blockchain node in the blockchain network, and a storage mounted to the first data management apparatus and a storage mounted to the second data management apparatus are configured to form a storage resource pool of the blockchain network;
a target data management apparatus in the plurality of data management apparatuses is configured to receive a data operation request, wherein the data operation request is used to perform an input/output I/O operation on target data; and
the target data management apparatus is further configured to: obtain a storage address of a plurality of data shards of the target data from the blockchain network based on the data operation request, and perform I/O on the target data in the storage resource pool based on the storage address of the plurality of data shards.

12. The system according to claim 11, wherein the data operation request is a write request, and the target data management apparatus is specifically configured to:
obtain an allocation policy based on the data operation request and a smart contract of the blockchain network;
allocate a storage resource to the plurality of data shards of the target data from the storage resource pool according to the allocation policy, to obtain the storage address of the plurality of data shards; and
write the plurality of data shards into the storage resource pool based on a storage address of at least one data shard, and store the storage address of the plurality of data shards in a distributed ledger of the blockchain network.

13. The system according to claim 12, wherein the target data management apparatus is further configured to:
obtain a sharding policy based on the data operation request and the smart contract of the blockchain network; and
obtain a sharding algorithm, a quantity of shards, and a quantity of copies of each data shard according to the sharding policy; and
the target data management apparatus is specifically configured to:
perform sharding on the target data based on the sharding algorithm and the quantity of shards, to obtain the plurality of data shards of the target data; and
write copies of each data shard into the storage resource pool based on a storage address of the copies of each of the plurality of data shards, and store the storage address of the copies of each data shard in the distributed ledger of the blockchain network.

14. The system according to claim 13, wherein each data shard comprises a plurality of copies; and
the target data management apparatus is specifically configured to:
write the plurality of copies of each data shard into different types of storage media in the storage resource pool.

15. The system according to any one of claims 12 to 14, wherein the target data management apparatus is further configured to:
determine at least one of a hash value of the target data, a hash value of each of the plurality of data shards, or a data attribute of the target data; and
store at least one of the hash value of the target data, the hash value of each of the plurality of data shards, or the data attribute of the target data in the distributed ledger of the blockchain network.

16. The system according to claim 11, wherein the data operation request is a read request, and the target data management apparatus is specifically configured to:
obtain the storage address of the plurality of data shards of the target data from a distributed ledger of the blockchain network based on the read request; and
the target data management apparatus is specifically configured to:
obtain the plurality of data shards from the storage resource pool based on the storage address of the plurality of data shards; and
aggregate the plurality of data shards, to obtain the target data.

17. The system according to claim 16, wherein the target data management apparatus is further configured to:
obtain an aggregation policy based on the data operation request and a smart contract of the blockchain network; and
the target data management apparatus is specifically configured to:
aggregate the plurality of data shards according to the aggregation policy, to obtain the target data.

18. The system according to claim 16, wherein the target data management apparatus is specifically configured to:
obtain local hash values and on-chain hash values of the plurality of data shards, wherein the local hash values are obtained by using a hash algorithm, and the on-chain hash values are hash values stored in the blockchain network;
when determining that the local hash values match the on-chain hash values, start the aggregation of the plurality of data shards, to obtain aggregated data; and
determine a hash value of the aggregated data, obtain a hash value of the target data from the blockchain network, and determine the aggregated data as the target data when the hash value of the aggregated data matches the hash value of the target data.

19. The system according to any one of claims 11 to 18, wherein the target data management apparatus is further configured to:
obtain, from a blockchain node corresponding to the target data management apparatus, first meta information of a data shard in a storage mounted to the target data management apparatus, and obtain second meta information of the data shard from a storage mounted to the target data management apparatus; and
when the first information does not match the second meta information, determine that a fault occurs, and store fault information in the distributed ledger of the blockchain network.

20. The system according to any one of claims 11 to 18, wherein the target data management apparatus is further configured to:
read fault information from the blockchain network;
when the fault information represents that a data shard in a storage mounted to the target data management apparatus is tampered with, deleted, or lost, obtain the data shard from a storage mounted to another data management apparatus, and locally store the data shard; and
store an updated storage address in the distributed ledger of the blockchain network.

21. A data management apparatus, wherein the data management apparatus corresponds to a blockchain node in a blockchain network, a storage mounted to the data management apparatus and a storage mounted to another data management apparatus in a distributed data management system are configured to form a storage resource pool of the blockchain network, and the data management apparatus comprises:
a communication module, configured to receive a data operation request, wherein the data operation request is used to perform an input/output I/O operation on target data; and
a management module, further configured to: obtain a storage address of a plurality of data shards of the target data from the blockchain network based on the data operation request, and perform I/O on the target data in the storage resource pool based on the storage address of the plurality of data shards.

22. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 10.

23. A computer-readable storage medium, comprising computer-readable instructions, wherein the computer-readable instructions are used to implement the method according to any one of claims 1 to 10.

24. A computer program product, comprising computer-readable instructions, wherein the computer-readable instructions are used to implement the method according to any one of claims 1 to 10.
